Europäisches Patentamt

European Patent Office

Office européen des brevets

(11) Publication number: **0 357 224**
A1

## (12) EUROPEAN PATENT APPLICATION

(21) Application number: 89307692.7

(22) Date of filing: 28.07.89

(51) Int. Cl.5: **B29C 61/06** , **H02G 15/04** , **H01R 4/72**

The title of the invention has been amended (Guidelines for Examination in the EPO, A-III, 7.3).

(30) Priority: 29.07.88 GB 8818079

(43) Date of publication of application:
07.03.90 Bulletin 90/10

(84) Designated Contracting States:
AT BE CH DE ES FR GB IT LI NL SE

(71) Applicant: RAYCHEM LIMITED
Rolls House 7, Rolls Buildings Fetter Lane
London, EC4 1NL(GB)

(72) Inventor: Collett, Derrick
17, Bathampton Street
Swindon, SN1 5EG Wiltshire(GB)

(74) Representative: Dlugosz, Anthony Charles et al
Raychem Limited Intellectual Property Law
Department Faraday Road Dorcan
Swindon, Wiltshire(GB)

(54) Hollow heat-recovering article.

(57) · A hollow, heat-recoverable article 1 for enclosing part of an object 6, 7, has two open ends and a thermoplastic lining on its interior surface. The article has a flap portion 4, that extends from one open end 5 of the article and which may be folded before recovery of the article so that it is retained inside the open end of the article during recovery.

Preferably the article includes a fusion bonded portion 2 in which different parts of the article have been brought together and have been bonded together by fusion of the lining with substantially no welding of the heat-recoverable material forming the article wall.

EP 0 357 224 A1

## Bonded Article

This invention relates to heat-shrinkable articles for use in enclosing objects.

A heat recoverable article is an article the dimensional configuration of which may be made substantially to change when subjected to heat treatment.

Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patent Nos. 2,027,962, 3,086,242 and 3,957,372. As is made clear in, for example, U.S. Patent No. 2,027,962, the original dimensionally heat-stable form may be a transient form in a continuous process in which, for example, an extruded tube is expanded, whilst hot, to a dimensionally heat-unstable form, but in other applications, a preformed dimensionally heat-stable article is deformed to a dimensionally heat-unstable form in a separate stage.

In the production of heat recoverable articles, the polymeric material may be cross-linked at any stage in the production of the article that will enhance the desired dimensionally recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, applications of heat will cause the article to assume its original heat-stable shape.

Such articles have been widely used for many years for enclosing objects such as electrical equipment, wiring and the like in order to protect them from the environment and to provide electrical insulation. The articles may be extruded in the form of a tube or may be formed as discrete pieces by moulding operations, and in either case a layer of adhesive may be provided on the interior surface of the article. However the production of moulded articles is a relatively expensive process involving performing operations on individual items which makes the cost of such articles inappropriate for certain applications. It has been proposed, for example in U.K. applications Nos. 2083403 and 2095617 to form discrete articles by welding together parts of tubing that may be rendered heat-recoverable either before or after the welding step. Such welding processes have the disadvantage that it is not possible, or at least very difficult, to provide the articles with an internal layer of adhesive.

In our copending International patent application No. PCT/GB89/00640 a hollow, heat-recoverable article for enclosing part of an object is described, the article having a thermoplastic lining on its interior surface and including a fusion bonded portion in which different parts of the article have been brought together and bonded together by fusion of the lining with substantially no welding of the heat-recoverable material forming the article wall, the thermoplastic lining having a softening point that is higher than the recovery temperature to enable the article to be recovered without rupture of the fusion bonded portion.

The articles may be formed by a process which comprises forming a heat-recoverable sheet or tube of material that has a thermoplastic lining, bringing together opposed portions of one or more such sheets or of the tube and bonding them together by fusion of the thermoplastic lining with substantially no welding of the material forming the sheet or tube wall, the thermoplastic lining having a softening point that is higher than the recovery temperature of the heat-recoverable material.

Sometimes it is desired to manufacture an article of this type to act as a cap, that is to say, so that it can be fitted on the end of a component to be encapsulated and, at least after recovery thereof, one end of the article will be closed to prevent ingress of fluids. According to the device described in our copending application this may be achieved by forming the device with a relatively high recovery ratio, e.g. at least 2.5:1 and especially at least 3.5:1 so that, as the article recovers, the lining will become thicker and will close the open end of the tube.

The present invention provides a hollow, heat-recoverable article for enclosing part of an object, the article having two open ends and a thermoplastic lining on its interior surface, the article including a flap portion that extends from one open end of the article and which may be folded before recovery of the article so that it is retained inside the open end of the article.

The article according to the present invention has the advantage that it is relatively inexpensive to manufacture since it can be manufactured by a process in which the article is formed by extrusion and in the form of an open-ended tube is then chopped or cut into discrete tubular pieces. When the article is positioned on the object to be encapsulated, the flap is simply folded into the open end of the tube substantially to close the tube and the article can then be heated to cause recovery thereof. This heating step will also cause the thermoplastic lining to soften and flow under the recovery forces of the article and to seal the end that is closed with the flap.

Preferably the article is a bonded article as described above which includes a fusion-bonded portion in which different parts of the article have been brought together and bonded together by fusion of the lining with substantially no welding of the heat-recoverable material forming the article wall. In this form of article the thermoplastic lining will have a softening point that is higher than the recovery temperature of the heat-recoverable material to enable the article to be recovered without rupture of the fusion-bonded portion or portions.

In some cases, depending on the configuration of the article, the flap may be folded into the open end of the article before the article is positioned on the object to be enclosed. However, in other cases the flap may be folded into the open end after the article has been positioned over the object to be encapsulated, e.g. after the object has been introduced into the article through the open end containing the flap. Thus, for example the article may have one or more axially extending seams that bifurcate the interior of the article or that divide the interior into more than two smaller channels. In this arrangement an article with a number of legs may be introduced into one end of the article so that its legs extend through the channels and the end may then be closed prior to recovery thereof.

Any polymeric material which can be crosslinked and to which the property of dimensional recoverability may be imparted such as those described in British patent No. 990,235, may be used to form the articles. Polymers which may be used include polyolefins such as polyethylene and ethylene copolymers for example with propylene, butene, hexene, octene, vinyl acetate or other vinyl esters, methyl or ethyl acrylate, polyamides, polyurethanes, polyvinyl chloride, fluoropolymers and polyesters e.g. polybutylene terephthalate and block copolymers of polybutylene terephthalate with polybutylene ether terephthalate. One particularly preferred group of polymers are ionomers such as those having carboxylate crosslinking sites. The recovery temperature of the article will depend on the choice of polymer and on the manufacturing process but is preferably in the range of from 70 to 120°C, and especially from 80 to 100°C.

The polymeric composition may be crosslinked, for example, by exposure to high energy radiation such as an electron beam or gamma-rays. Radiation dosages in the range 20 to 800 kGy, preferably 20 to 500 kGy, e.g. 20 to 200 kGy and particularly 40 to 120 kGy are in general appropriate depending on the characteristics of the polymer in question. For the purposes of promoting cross linking during irradiation, preferably from 0.2 to 15 weight per cent of a crosslinking promotor such as a poly-functional vinyl or allyl compound, for example, triallyl cyanurate, triallyl isocyanurate (TAIC), methylene bis acrylamide, metaphenylene diamine bis maleimide or other crosslinking agents, for example as described in U.S. patents Nos. 4,121,001 and 4,176,027, are incorporated into the composition prior to irradiation.

The polymeric composition may include additional additives, for example reinforcing or non-reinforcing fillers, stabilisers such as ultra-violet stabilisers, antioxidants, acid acceptors and anti-hydrolysis stabilisers, pigments, processing aids such as plasticizers, halogenated or non-halogenated flame retardants, fungicides and the like.

The thermoplastic lining may be formed from any of the polymers mentioned above for the material provided that it has a softening point above the recovery temperature of the article, preferably at least 10°C above the recovery temperature and especially at least 20°C above the recovery temperature. The thermoplastic lining is preferably formed from a material known conventionally as a hot-melt adhesive for example a polyamide, an olefin homo- or copolymer such as ethylene vinyl acetate copolymer, or a polyester. The preferred polyamides are characterized by the fact that their amide linkages are separated by an average of at least fifteen carbon atoms and have amorphous structures in contrast with the more highly crystalline, fibre forming polyamides such as nylon 6 or nylon 6.6. Advantageously the polyamides are blended with a polyester, e.g. one based on terephthalic acid and/or isophthalic acid, hexane dioc acid and/or decanedioic acid, with a straight-chain or branched polyol having from 2 to 6 carbon atoms for each diol sequence.

Any of the techniques conventionally employed for fusing together polymeric materials may be employed in the process of the present invention, e.g. radio frequency, ultrasonic or hot bar welding, and pressure may additionally be applied to ensure a satisfactory bond.

The articles according to the invention may be formed in a variety of configurations depending on their use. For example a pair of sheets, each coated on one side with a lining of hot-melt adhesive may be brought together and bonded along their longitudinally extending lateral edges to form a generally tubular structure which may have a uniform or non uniform cross-section. Instead a pair of longitudinally stretched sheets may be brought together and bonded by a number of transversely extending seams to form an array of open-ended tubes as described in British patent application No. 2082110. In yet another form of device opposite walls of a tube may be brought together and bonded along a short longitudinally extending seam in order to bifurcate the tube. With all forms of device the tube or sheets may be cut during or after the bonding step to form the descrete articles. Alternatively a line of weakness e.g. a row of perforations or tear-weld may be formed either along the line of bond or along a different line during, or subsequent to, the bonding step so that individual articles may be removed manually as desired.

The articles usually will have a recoverable wall thicknedd in the range of from 0.5 to 0.3, and espe cially from 0.1 to 0.2 mm, and a thermoplastic lining thickness in the range of from 0.1 to 0.4 mm, and especially from 0.15 to 0.25 mm, making a total wall thickness of about 0.25 to 0.45 mm in the preferred case.

The articles according to the invention may be used for a number of purposes, for example they can be used for enclosing electrical and electronic components to protect and isolate them, for capping electrical cables and harnesses, for enclosing branch-outs for electrical harnessing and for providing identifying labels to wires and other articles.

One form of article according to the invention will now be described by way of example with reference to the accompanying drawings, in which:

Figure 1 is a side view of the article before positioning about an object to be enclosed; and

Figure 2 is a side view of the device of figure 1 immediately before recovery thereof.

Referring to the accompanying drawings a tubular article 1 has been formed by co-extruding a tube of Surlyn ionomer of wall thickness approximately 1.0 to 1.5 mm with an internal lining of a thermoplastic (70% dimer diamine-polyamide blended with 30% Dynapol (trade name) polyester. The thermoplastic lining had a thickness in the range of from 0.05 to 0.3 mm, especially from 0.1 to 0.2 mm. The Surlyn ionomer is then cross-linked by high energy electron irradiation, while maintaining the lining uncrosslinked, e.g. by the provision of a crosslinking inhibitor therein. Subsequently the tube is pneumatically expanded to an expansion ratio of about 4.1.

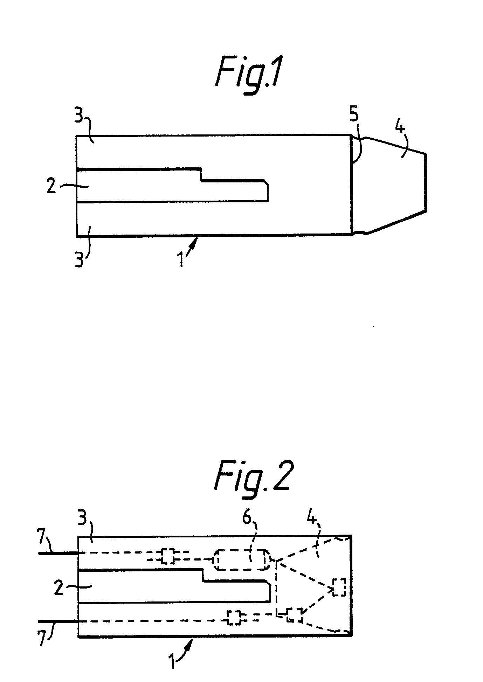

The tube has a central portion 2 in which the walls have been brought together and have been fusion-bonded by means of an r.f. welding apparatus to form a pair of legs 3, the fusion-bonding operation causing the lining to fuse with substantially no welding of the Surlyn walls. After the welding step the tube is cut into discrete articles as shown in figure 1. Each article has a flap portion 4 that extends from one open end 5 of the article.

Figure 2 shows the article of figure 1 after a small electronic device 6 supported on wires 7, e.g. a resistor, capacitor or the like, has been inserted into the article with one wire 6 extending through each leg 3. After insertion of the device the flap portion 4 is folded into the open-end 5 of the article as shown and the article is ready to be recovered about the com ponent and wires. The article may be recovered by heating it with a small hot-air gun whereupon the ther moplastic lining thickness due to the contraction of the article, and the lining and seals the end 5 of the article has been substantially blocked by the flap por tion 4.

## Claims

1. A hollow, heat-recoverable article for enclosing part of an object, the article having two open ends and a thermoplastic lining on its interior surface, the article including a flap portion that extends from one open end of the article and which may be folded before recovery of the article so that it is retained inside the open end of the article during recovery.

2. An article as claimed in claim 1, which includes a fusion bonded portion in which different parts of the article have been brought together and have been bonded together by fusion of the lining with substantially no welding of the heat-recoverable material forming the article wall.

3. An article as claimed in claim 1 or claim 2, wherein the thermoplastic lining has a softening point at least 10°C above the recovery temperature of the article.

4. An article as claimed in claim 3, wherein the thermoplastic lining has a softening point at least 20°C above the recovery temperature of the article.

5. An article as claimed in any one of claims 1 to 4, which has a recovery ratio of at least 3:1.

6. An article as claimed in claim 5, wherein the article has a recovery ratio of 3.5:1.

7. An article as claimed in any one of claims 1 to 6, wherein the thermoplastic lining comprises a polyamide, an olefin homo- or copolymer or a polyester.

8. An article as claimed in any one of claims 1 to 7, wherein the material forming the article wall comprises an ionomer or an olefin homo- or copolymer.

9. An article as claimed in any one of claims 1 to 8, which has been formed by bonding together a pair of sheets of material along their side edges.

10. An article as claimed in any one of claims 1 to 8, which has been formed by bonding together parts of opposed walls of a tube to furcate the tube.

10. An article as claimed in any one of claims 1 to 10, wherein the thermoplastic lining has a thickness in the range of from 0.05 to 0.2 mm.

12. An article as claimed in any one of claims 1 to 11, wherein the heat-shrinkable material forming the wall is cross-linked.

## Fig.1

## Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 678 174 (H.E. GANZHORN) <br> * Column 5, lines 31-59; figures * | 1 | B 29 C 61/06 <br> H 02 G 15/04 <br> H 01 R 4/72 |
| A | US-A-4 386 984 (J.E. JERVIS) <br> * Column 1, line 53 - column 2, line 32; figures * | 1 | |
| A | FR-A-1 055 640 (J. GRUSSEN) <br> * Page 2, left-hand column, line 47 - right-hand column, line 2; page 3, left-hand column, lines 9-14; figures 21,22 * | 1 | |
| A | US-A-3 814 139 (P.V. LOYD et al.) <br> * Column 4, lines 11-24; figures * | 1,2 | |
| A | GB-A-1 018 391 (STOREY BROTHERS) <br> * Claims; figures * | | |
| A,D | EP-A-0 046 027 (RAYCHEM) | | |

TECHNICAL FIELDS
SEARCHED (Int. Cl.5)

B 29 C
H 01 R
H 02 G
B 65 D

The present search report has been drawn up for all claims

| Place of search | Date of completion of the search | Examiner |
|---|---|---|
| THE HAGUE | 03-11-1989 | SZAMOCKI G.J.A. |